# EUROPÄISCHE PATENTSCHRIFT

(11) **EP 1 350 027 B1**
(45) Veröffentlichungstag und Bekanntmachung des Hinweises auf die Patenterteilung: **07.11.2012**
(21) Anmeldenummer: 01985915.6
(22) Anmeldetag: 20.12.2001
(51) Int. Cl.: F03D 1/06, F03D 3/06, F03D 7/02, B64C 9/16, B64C 9/00, B64C 3/30

(54) **ROTORBLATT FÜR EINE WINDENERGIEANLAGE**
ROTOR BLADE FOR A WIND POWER INSTALLATION
PALE DE ROTOR POUR EOLIENNE

(30) Priorität: 23.12.2000 DE 10064912; 26.10.2001 DE 10152449
(43) Veröffentlichungstag der Anmeldung: 08.10.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/015106
(87) Internationale Veröffentlichungsnummer: WO 2002/051730

(56) Entgegenhaltungen:
- EP-A- 0 283 730
- EP-A- 0 375 382
- DE-A- 3 126 677
- DE-A- 4 428 731
- FR-A- 2 587 675
- GB-A- 2 311 978
- US-A- 5 527 151

## Beschreibung

Die vorliegende Erfindung betrifft ein Rotorblatt für eine Windenergieanlage sowie eine Windenergieanlage mit wenigstens einem erfindungsgemäßen Rotorblatt.

Rotorblätter für Windenergieanlagen sind allgemein bekannt und an jeder Windenergieanlage weithin sichtbar. Diese Rotorblätter weisen eine äußere Form auf, die den besonderen aerodynamischen Anforderungen Rechnung trägt. Um Material und Gewicht einzusparen, bestehen diese Rotorblätter allgemein aus einer ersten, inneren Tragstruktur und einer diese erste Tragstruktur umhüllenden, aerodynamisch günstig ausgebildeten Oberfläche. FR 2290 585, FR 2587675 offenbaren Rotorblätter mit verformbarer Oberfläche.

Bei großen Windenergieanlagen nehmen die Rotorblätter aus Gründen der Aerodynamik beträchtliche Dimensionen an. Dies wirkt sich zum einen auf die Fertigung und den Transport, und zum anderen auf die Lasten aus, welche auf die Windenergieanlage im Betrieb einwirken. Diese ergeben sich insbesondere aus der mit steigender Größe automatisch zunehmenden Blattoberfläche wie auch der vergrößerten von den Rotorblättern überstrichenen Fläche.

Windenergieanlagen müssen nach vorgegebenen Richtlinien fürbestimmte Lastfälle ausgelegt werden. Dies sind zum einen die im Betrieb vorkommenden Lasten (sogenannte Betriebslasten) und zum anderen die sogenannten Extremlastfälle. Diese Extremlastfälle werden aus bestimmten Situationen bzw. Störungen wie z.B. einem Netzausfall, einer Störung der Blattverstellung, einer außerordentlichen starken Windbö (50-Jahres-Bö etc.), abgeleitet.

Dabei ist es verständlich, dass die von den Rotorblättern auf die Anlage übertragenen Lasten wesentlich von der dem Wind ausgesetzten Rotorblatt-Oberfläche abhängen. Für die Berechnung der Extremlast wird angenommen, dass die gesamte Rotorblattfläche einem Maximalwind ausgesetzt ist. Entsprechend müssen alle nachfolgenden Komponenten wie Antriebsstrang, Maschinenträger, Turm, Fundament, usw. ausgelegt werden.

Daraus ergibt sich, dass, je kleiner die Windangriffsfläche, also insbesondere die Rotorblattfläche ist, um so geringer das Lastniveau ist, für welches die Anlage ausgelegt werden muss. Das bedeutet auch einen geringeren Materialaufwand und damit geringere Kosten.

Dem gegenüber steht allerdings eine aus aerodynamischen Gründen benötigte, minimale Oberflächengröße, um die erforderlichen Kräfte für den Betrieb der Windenergieanlage - die Drehung des Generators - aufbringen zu können. Dabei ist es bei den bekannten Rotorblättern nachteilig, dass insbesondere im Blattwurzelnahen Bereich eine mit zunehmender Rotorblattgröße ebenfalls zunehmende Rotorblattiefe benötigt wird. Diese Tiefe wird dabei so groß, dass bereits ein Straßentransport eines solchen Rotorblattes nicht mehr, bzw. nur noch mit unverhältnismäßig hohem Aufwand möglich ist.

Die Aufgabe der vorliegenden Erfindung ist es daher, ein Rotorblatt anzugeben, bei dem die beschriebenen Nachteile vermieden werden und welches die aerodynamisch erforderliche Oberfläche aufweist.

Die Aufgabe wird erfindungsgemäß mit einem Rotorblatt mit den Merkmalen nach Anspruch 1 gelöst. Vorteilhafte Weiterbildungen sind in den weiteren Ansprüchen beschrieben.

Der Erfindung liegt die Erkenntnis zugrunde, dass im Normalbetrieb der Windenergieanlage eine bestimmte Rotorblattfläche (Nennfläche) erforderlich ist, während diese bei Extremwind und z.B. in einer Transportsituation u.U. zu groß ist.

Erfindungsgemäß wird dahervorgeschlagen, ein Rotorblatt der eingangs genannten Art derart weiterzubilden, dass ein Teil der Oberfläche aktiv verformbar oder bewegbar ist.

In einer bevorzugten Ausführungsform der Erfindung ist ein Teil der Oberfläche aus einem verformbaren Material gebildet, das Teil eines geschlossenen Behälters ist. Dieser geschlossene Behälter kann z.B. mit einem gasförmigen Medium gefüllt werden, wobei dieses gasförmige Medium mit einem vorgebbaren Druck beaufschlagt wird. Dadurch ergibt sich eine teilweise aufblasbare Oberfläche des Rotorblattes, die während des Transportes oder bei Auftreten von Extremwind entlüftet werden kann und somit weniger Raum beansprucht bzw. unter dem Winddruck nachgibt. Dadurch wird die wirksame Oberfläche des Rotorblattes und damit die Angriffsfläche fürden Wind kleiner. Gleichzeitig sinkt die Belastung der nachfolgenden Komponenten einschließlich des Turmes.

In einer besonders bevorzugten Ausführungsform weist das Rotorblatt eine an sich und/oder in sich bewegbare zweite Tragstruktur auf.

Dabei kann das verformbare Material an vorgebenen Stellen dieser zweiten Tragstruktur befestigt sein. Weiterhin kann das verformbare Material mit einer Seite an einem drehbaren Wickelkern befestigt sein.

Im Normalbetrieb der Windenergieanlage kann nun die zweite Tragstruktur ausgefahren sein, d. h., Faltarme können vollständig gestreckt oder teleskopartige Arme voll ausgefahren sein. Das verformbare Material kann mit einer Seite an einem drehbaren Wickelkern befestigt sein. Soll nun die Rotorblattfläche verringert werden, wird - analog zu einer Markise - der Wickelkern so gedreht, dass er das verformbare Material aufwickelt. Gleichzeitig werden die Faltarme gefaltet und verkleinern die zweite Tragstruktur im Bereich der verkleinerbaren Oberfläche, so dass sich die Oberfläche des Rotorblattes entsprechend verringert.

In einer alternativen Ausführungsform besteht ein Teil der Oberfläche des Rotorblattes aus lamellenartigen Streifen, die jeweils auf einer um die eigene Längsachse schwenkbaren Tragschiene angeordnet sind. Dabei sind diese Lamellen im Normalbetrieb so ausgerichtet, dass sie die aerodynamisch wirksame Oberfläche des Rotorblattes vergrößern. Für den Transport und/oder bei Extremlasten können die Tragschienen so geschwenkt werden, dass diese Lamellen z.B. in den Windschatten des verbleibenden Rotorblattes gelangen und dadurch wird die Oberfläche des Rotorblattes verringert.

In einer insbesondere bevorzugten Weiterbildung besteht ein beweglicher Teil der aerodynamisch wirksamen Oberfläche des Rotorblattes aus einem einzelnen Flächenelement, welches in Richtung der Tiefe des Rotorblattes verschiebbar ist. Im Normalbetrieb verlängert dieses Flächenelement die Oberfläche des Rotorblattes, bevorzugt an der Saugseite, um eine große, aerodynamisch wirksame Oberfläche zu schaffen.

Zur Verringerung der Oberfläche kann dieses Flächenelement, vergleichbar mit dem Klappensystem einer Flugzeugtragfläche so verfahren werden, dass es entweder in das Rotorblatt hinein verschoben wird und somit von der verbleibenden Oberfläche des Rotorblattes abgedeckt ist, oder auf die Oberfläche des Rotorblattes verschoben wird und seinerseits die Oberfläche des Rotorblattes abdeckt. In jedem Fall ergibt sich hieraus eine Verringerung der Oberfläche des Rotorblattes.

In einer alternativen Ausführungsform kann dieses Flächenelement mit einer Seite schwenkbar an der ersten Tragstruktur bzw. der Hinterkante des Rotorblattes angelenkt sein. Zur Veränderung der Größe der Rotorblatt-Oberfläche kann dieses Element um diese Schwenkachse herum entweder zur Saugseite oder zur Druckseite des Rotorblattes hin geschwenkt werden.

Eine Schwenkung dieses Flächenelementes um etwa 90° bewirkt dabei, dass dieses Element im Wesentlichen senkrecht zu der Richtung der Luftströmung am Rotorblatt steht und eine entsprechende Bremswirkung entfaltet, da es für die auf der Oberfläche des Rotorblattes entlang strömende Luft ein Hindernis bildet.

Im Folgenden werden mehrere erfindungsgemäße Ausführungsformen anhand der beigefügten Zeichnungen näher erläutert. Dabei zeigen:
- Figur 1: eine Draufsicht auf ein erfindungsgemäßes vollständiges Rotorblatt;
- Figur 2: eine Draufsicht auf den vorderen Teil eines erfindungsgemä-βen Rotorblattes;
- Figur 3: eine vereinfachte Querschnitts-Darstellung einer Ausführungsform eines erfindungsgemäßen Rotorblattes;
- Figur 4: eine vereinfachte Querschnitts-Darstellung einer zweiten Ausführungsform eines Rotorblattes;
- Figuren 5a,5b: eine vereinfachte Querschnitts-Darstellung einer dritten Ausführungsform eines Rotorblattes;
- Figur 6: eine vereinfachte Querschnitts-Darstellung einer vierten Ausführungsform eines Rotorblattes;
- Figur 7: eine vereinfachte Querschnitts-Darstellung einer fünften Ausführungsform eines Rotorblattes;
- Figuren 8a,8b: vereinfachte Querschnitts-Darstellungen einer sechsten Ausführungsform eines Rotorblattes;
- Figur 9: Draufsicht auf eine Konstruktionsvariante eines Rotorblattes.

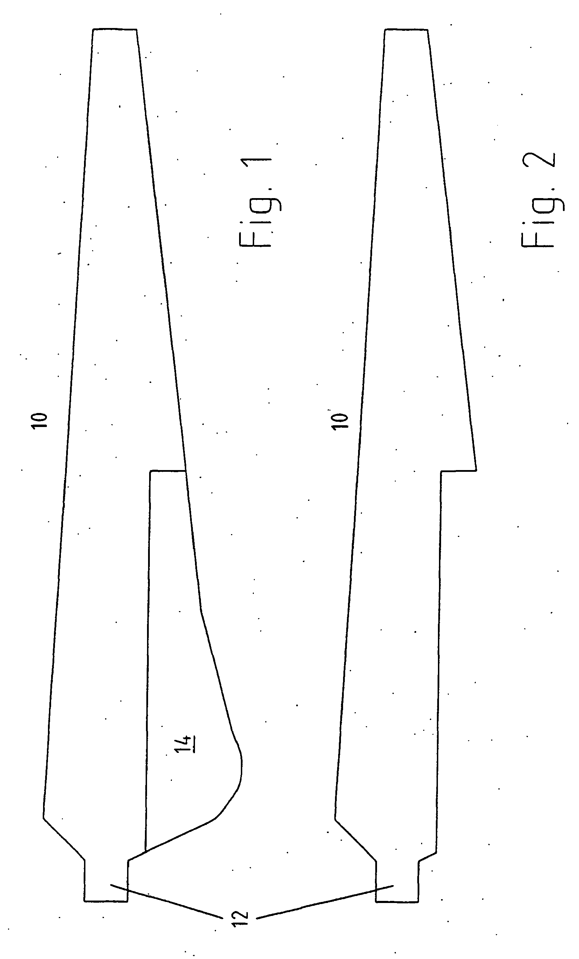

In Figur 1 ist eine Draufsicht eines vollständigen, erfindungsgemäßen Rotorblattes vereinfacht dargestellt. Das Rotorblatt 10 ist in zwei Bereiche aufgeteilt. Dabei ist das Rotorblatt 10 in wesentlichen Teilen konventionell aufgebaut. In einem der Rotorblattwurzel 12 benachbarten Bereich, nämlich dem Bereich mit der größten Blatttiefe ist jedoch eine Teilung des Rotorblattes erkennbar. Diese Teilung markiert den Bereich des Rotorblattes 14, dessen Oberfläche bei Bedarf verringert und somit der Einwirkung des Windes entzogen werden kann.

Der feste Teil des Rotorblattes 10, dessen Oberfläche unverändert bleibt, ist in Figur 2 gezeigt. Wie in dieser Figur deutlich erkennbar ist, ist die aerodynamisch wirksame Oberfläche des Rotorblattes 10 deutlich verringert, und dadurch ist auch die Belastung, insbesondere in Extremwind-Situationen, deutlich geringer als bei einem in konventioneller Weise aufgebauten Rotorblatt.

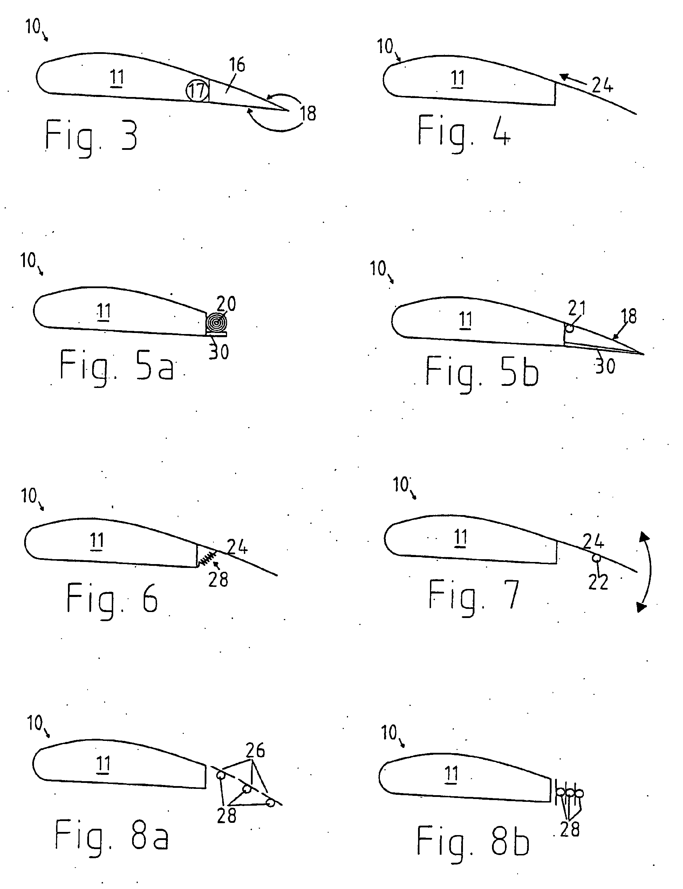

Figur 3 zeigt eine vereinfachte Querschnitts-Darstellung einer erfindungsgemäßen Ausführungsform. Dabei ist das Rotorblatt 10 in einen vorderen Bereich 11 und einen Hinterkasten 14 aufgeteilt. Dieser Hinterkasten 14 besteht aus zwei Bahnen verformbaren Materials 18, die zusammen mit der Rückwand des vorderen Bereiches 11 einen geschlossenen Behälter 16 bilden. Wird nun dieser geschlossene Behälter 16 unter Druck mit einem gasförmigen Medium befüllt, bildet das verformbare Material 18 einen Teil (in Figur 1 mit dem Bezugszeichen 14 kenntlich gemacht) der im Normalbetrieb aerodynamisch wirksamen Oberfläche des erfindungsgemäßen Rotorblattes 10.

Durch eine geeignete Wahl des Fülldruckes ergibt sich eine solche Stabilität dieses Teils des Rotorblattes 10, dass er bei normalen Windverhältnissen seine normale Wirkung entfaltet. In einer Extremwind-Situation ist der Winddruck auf diesen Teil des Rotorblattes 10 jedoch größer, so dass dann der äußere Druck größer als der Innendruck ist, und somit kommt es zu einer Verformung des Rotorblattes im Bereich des Hinterkastens 14 und das Rotorblatt gibt dem äußeren Winddruck nach. Dadurch wird die Angriffsfläche für diesen Extremwind geringer und damit die Lasten auf die nachfolgende Konstruktion kleiner. Ergänzend sei ausgeführt, dass dieser Teil des Hinterkastens (in dem das Füllmedium untergebracht ist), z.B. beim Überschreiten einer vorgegebenen Windgeschwindigkeit aktiv entleert werden kann, um die Oberfläche des Rotorblattes zu verkleinern. Diese aktive Entleerung hat den Vorteil, dass die Form des Rotorblattes jederzeit definiert ist, während bei einem Nachgeben des Hinterkastens infolge äußeren Druckes unbestimmte Situationen auftreten könnten.

Um Beschädigungen insbesondere des Behälters 16 zu vermeiden, kann z.B. ein (nicht dargestelltes) Überdruckventil vorgesehen sein, durch welches ein sich im Behälter 16 bildender Überdruck entweichen kann.

Durch die Verwendung eines Kompressors 17 kann der für den Normalbetrieb erforderliche Druck wieder hergestellt werden. Werden weiterhin (ebenfalls nicht dargestellte) steuerbare Ventile und/oder Drucksensoren vorgesehen, kann der Fülldruck in dem Behälter 16 auch bei Schwankungen des Winddruckes nachgeführt werden, um so stets optimale Betriebsbedingungen beizubehalten.

Figur 4 zeigt eine zweite Ausführungsform , bei welcher anstelle eines vollständigen Hinterkastens 14 die Oberfläche der Saugseite des Rotorblattes 10 verlängert ist. Diese Verlängerung ist ein Flächenelement 24, welches sich an die Oberfläche des vorderen Bereiches 11 anschliesst.

Zur Verringerung der aerodynamisch wirksamen Fläche kann dieses Flächenelement 24 in der Richtung des Pfeiles verschoben werden. Dieses Verschieben kann z.B. hydraulisch, nämlich mit entsprechenden Hydraulikzylindern, pneumatisch, mit Pneumatikzylindern, durch Elektroantriebe oder auf andere geeignete Weise erfolgen. Dazu müssen natürlich entsprechende (jedoch aus Gründen der Übersichtlichkeit in der Figur nicht dargestellte) Pumpen, Kompressoren oder Antriebe (Aktuatoren) vorgesehen sein.

Dabei kann dieses Verschieben in den vorderen Bereich hinein erfolgen, so dass die Oberfläche des vorderen Bereiches 11 das Flächenelement 24 überdeckt. Alternativ kann die Verschiebung auch auf der Oberfläche des vorderen Bereiches 11 erfolgen, so dass das Flächenelement 24 seinerseits den entsprechenden Teil der Oberfläche des vorderen Bereiches 11 überdeckt. In beiden Fällen ergibt sich eine Verringerung der aerodynamisch wirksamen Oberfläche des Rotorblattes 10.

Eine dritte Ausführungsform ist in den Figuren 5a und 5b gezeigt. Figur 5a zeigt einen Wickel 20 eines verformbaren Materials und das Bezugszeichen 30 bezeichnet Faltarme, die im gefalteten Zustand sind. Die Mechanik kann hier vergleichbar mit derjenigen einer Markise sein.

In Figur 5b ist diese Ausführungsform im Zustand des Normalbetriebs gezeigt. Die Faltarme 30 sind gestreckt, und da das verformbare Material 18 daran befestigt ist, wurde dieses beim Ausfahren der Faltarme 30 von dem Wickel 20 abgewickelt, so dass der Wickelkern 21 jetzt nicht mehr den gesamten Materialwickel trägt.

In dieser abgewickelten Situation ist das verformbare Material 18 einerseits an dem Wickelkern 21 und andererseits an den in der Figur nach rechts weisenden Enden der Faltarme 30 befestigt. Diese Enden der Faltarme 30 können wiederum durch einen nicht dargestellten Steg verbunden sein, um einerseits eine höhere Festigkeit der Konstruktion zu erreichen und andererseits das verformbare Material zu fixieren.

Um ein Nachgeben des verformbaren Materials 18 zwischen dem Wickelkern 21 und den äußeren Enden der Faltarme 30 zu verhindern, kann unterhalb des verformbaren Materials 18 eine (nicht dargestellte) scherengitterartige Vorrichtung vorgesehen sein, die synchron mit den Faltarmen 30 betätigt wird und das verformbare Material 18 im ausgefahrenen Zustand stützt.

Ein Verringern der wirksamen Oberfläche verläuft in umgekehrter Weise; die Faltarme 30 und das (nicht dargestellte) Scherengitter werden eingefahren (gefaltet) und gleichzeitig wird das verformbare Material 18 auf dem Wickelkern 21 aufgewickelt, so dass sich schließlich wieder der in Figur 5a dargestellte Wickel 20 ergibt und die wirksame Oberfläche des Rotorblattes 10 verringert ist.

In einer in Figur 6 gezeigten vierten Ausführungsform ist das Flächenelement 24 an der Rückseite des vorderen Bereiches 11 schwenkbar angelenkt und verlängert somit die Saugseite dieses vorderen Bereiches 11. Dabei wird das Flächenelement 24 von einer Druckfeder 28 gestützt, die zwischen dem Flächenelement 24 und der Tragkonstruktion des vorderen Bereiches 11 angeordnet ist.

Im Normalbetrieb stützt diese Druckfeder 28 das Flächenelement 24 so, dass es die gewünschte Position beibehält. Ergibt sich nun jenseits der normalen Betriebsbedingungen ein Winddruck auf der Oberseite des Rotorblattes 10, steigt der Druck auf die Oberfläche des Flächenelementes 24 und überwindet die Kraft der Feder 28, so dass das Flächenelement 24 in der Figur 6 nach unten gedrückt wird, dem Winddruck also nachgibt, und somit die aerodynamisch wirksame Oberfläche entsprechend verringert.

Alternativ zu der Feder 28 können natürlich entsprechende teleskopische Elemente wie hydraulische oder pneumatische Vorrichtungen oder mechanische Vorrichtungen zur aktiven Verstellung des Flächenelements gebildet sein, z.B. können Gewindestangen und Schneckenantrieb o.ä. verwendet werden, um das Flächenelement 24 in einer ersten vorgegebenen Position zu halten oder in eine zweite vorgegebene Position zu verfahren. Für die Betätigung dieser Stellglieder müssen natürlich entsprechende Pumpen, Kompressoren oder Antriebe vorgesehen sein, die in dieser Figur wiederum zur Verbesserung der Übersichtlichkeit nicht dargestellt sind.

Ebenso kann wiederum die Windlast erfasst werden, die auf das Flächenelement 24 einwirkt und abhängig von dieser erfassten Windlast kann das Flächenelement 24 um die Schwenkachse herum geschwenkt werden, um eine für die momentanen Betriebsbedingungen optimale Einstellung vorzunehmen.

Figur 7 zeigt eine fünfte Ausführungsform. In dieser fünften Ausführungsform ist das Flächenelement 24 anstelle einer schwenkbaren Anlenkung an der Rückseite des vorderen Bereiches 11 auf einer um ihre eigene Längsachse drehbaren Schwenkachse 22 angeordnet. In der in Figur 7 gezeigten Position verlängert das Flächenelement 24 wiederum die aerodynamisch wirksame Oberfläche des Rotorblattes 10.

Zur Verringerung dieser Oberfläche wird nun die Schwenkachse 22 mit dem daran befestigten Flächenelement 24 um ihre Längsachse derart gedreht, dass sich das äußere Ende des Flächenelementes 24 in einer der beiden durch den Doppelpfeil gezeigten Richtungen bewegt. Dies führt wiederum zu einer Verringerung der aerodynamisch wirksamen Oberfläche des Rotorblattes 10 und damit einhergehend zu einer Veränderung der Windlast auf das Rotorblatt 10 und alle nachfolgenden Komponenten der Windenergieanlage.

Eine Variante der in Figur 7 gezeigten Ausführungsform ist in den Figuren 8a und 8b dargestellt. Dabei ist das in Figur 7 mit 24 bezeichnete Flächenelement in Figur 8a in drei lamellenartige Elemente 26 aufgeteilt. Diese sind in Figur 8a absichtlich mit einem Abstand dargestellt, um diese Aufteilung zu verdeutlichen. In einer tatsächlichen Ausführungsform sind diese drei Elemente natürlich so angeordnet, dass sie eine möglichst geschlossene Fläche bilden, die wiederum möglichst glatt an den vorderen Bereich 11 des Rotorblattes 10 anschließt.

Jede der Lamellen 26 ist auf einer eigenen Schwenkachse angeordnet. Jede dieser Schwenkachsen 28 ist um ihre eigene Längsachse drehbar und gestattet so durch ein Drehen der Schwenkachse 28 um die Längsachse ein Verschwenken der Lamellen 26.

Figur 8b zeigt die Vorrichtung in der Situation, in weicher diese Lamellen so geschwenkt sind, dass die aerodynamisch wirksame Oberfläche des Rotorblattes 10 verringert ist. Dabei sind die Lamellen 26 in den Strömungsschatten des vorderen Bereiches 11 geschwenkt. Dadurch wirken sie einerseits nicht mehr als Rotorblatt-Oberfläche, sind andererseits aber auch dem Angriff des Windes entzogen und damit keinen erhöhten Belastungen ausgesetzt.

Eine solche Anordnung wird erreicht, indem neben einer Drehung der Schwenkachsen 28 um ihre Längsachsen außerdem der Abstand zwischen der in der Figur linken Schwenkachse 28 und dem vorderen Bereich 11 des Rotorblattes 10 einerseits und zwischen den Schwenkachsen 28 untereinander andererseits verringert wird.

Sofern in den Figuren nur eine Verlängerung der Saugseite der Oberfläche dargestellt ist, kann natürlich alternativ oder ergänzend die Oberfläche der Druckseite entsprechend verändert werden.

Wird eine Windenergieanlage mit den vorbeschriebenen Rotorblättern ausgestattet, so ist es möglich, dass bei Auftreten einer Extremwind-Situation nicht nur die große Windstärke festgestellt wird, was mittels Windgeschwindigkeitsmessgeräten erfolgen kann, sondern dass auch durch eine entsprechende Steuerung die Größe der Oberfläche des Rotorblattes dann deutlich verringert wird. Wie in Figur 1 und 2 zu erkennen, ist beispielsweise die Fläche des Rotorblattes nach Figur 1 um mehr als 10% größer als die Oberfläche des Rotorblattes nach Figur 2. Während die Normalgröße des Rotorblattes im Nennbetrieb der Windenergieanlage eingestellt wird und zwar bei einer Windgeschwindigkeit im Bereich von 2-20 m/s Windgeschwindigkeit, wird die Oberflächengröße bei einer Windgeschwindigkeit von oberhalb von 20 m/s verringert werden, so dass die Oberflächengröße deutlich - wie in Figur 2 dargestellt - abnimmt.

Die Steuerung ist bevorzugt computergestützt und sorgt im Bedarfsfall für die jeweils optimal eingestellte Oberflächengröße des Rotorblattes.

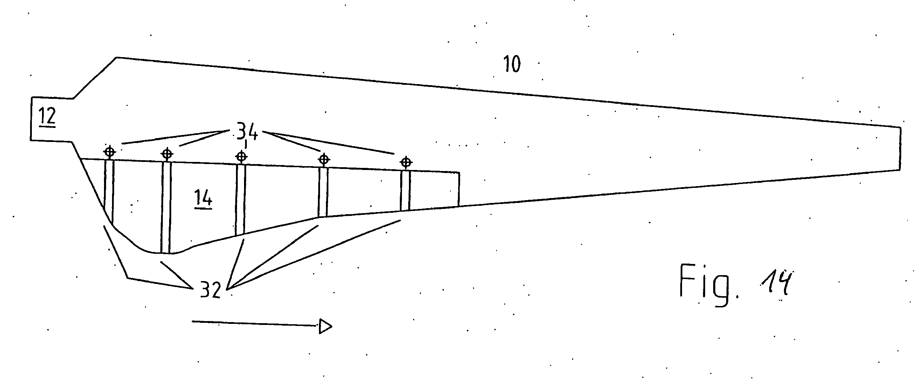

Figur 14 zeigt eine weitere Konstruktionsvariante eines erfindungsgemäßen Rotorblattes. Dabei wird die Struktur durch verschwenkbare Bügel 32 aufgebaut, die mit einer wiederum verformbaren Folie bespannt sein können und in Lagepunkten 34 schwenkbar gelagert sind. Durch eine Bewegung in Richtung der Rotorblattspitze (Pfeil) können diese Schwenkbügel nun beispielsweise um die Lagerpunkte 34 herumgeschwenkt werden und somit das Hinterkasten-Profil verändern.

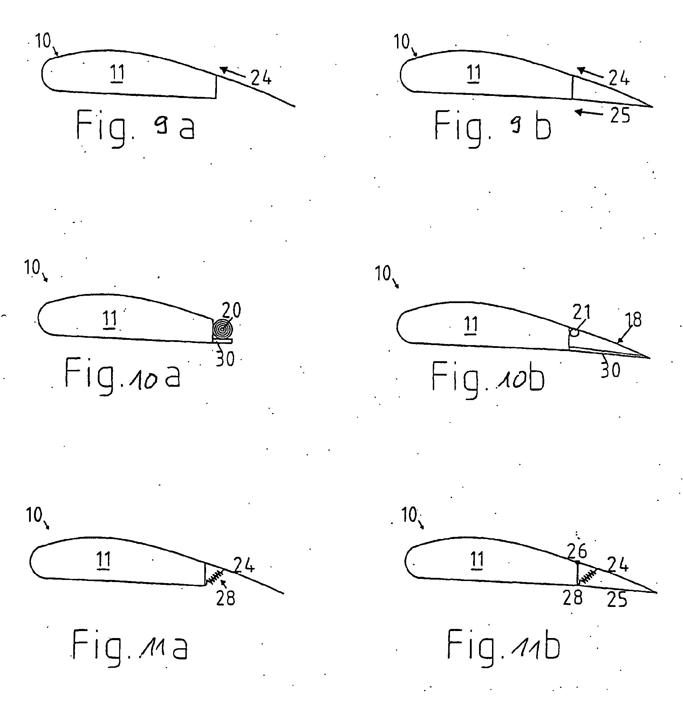

Die weiteren Figuren 9a bis 14b zeigen weitere alternative bzw. ergänzende Ausführungsformen zu den bisherigen Figuren 3 bis 8b.

Figur 11b (Figur 11a entspricht im Wesentlichen Figur 6) ist in Ergänzung zu Figur 6 ein Element 25 an der Druckseite dargestellt. Da der Angriffspunkt für die Feder 28 nicht gegenüber der Darstellung in Figur 6 bzw. 11a geändert wurde, müssen die Elemente 24 und 25 an der Blatthinterkante zusammenhängen, so dass sie um einen Anlenkpunkt 26 schwenkbar sind. Unter Umständen bietet es sich bei dieser Lösung an, eine Überlappung von dem Rotorblattkasten 11 über das Element 25 entlang der Rotorblattlänge auszubilden.

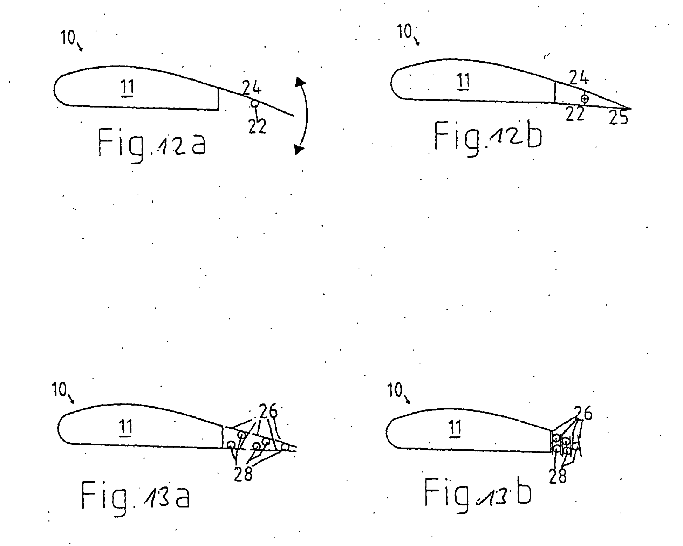

Figur 12b (Erweiterung von dem, was in Figur 7 bzw. Figur 12a dargestellt ist) ist ebenfalls ein druckseitiges Element 25 dargestellt, dass in dem dargestellten Fall über eine mechanische Verbindung ebenso wie das saugseitige Element 24 an einer gemeinsamen Welle 12 befestigt ist.

Die Figuren 13a und 13b zeigen eine Weiterentwicklung dessen, was bereits in den Figuren 8a und 8b dargestellt ist. Dabei sind für entsprechende Elemente an der Druckseite teils eigene Wellen 28 dargestellt. Figur 13a zeigt analog zu Figur 8a ein Rotorblatt im Normalbetrieb, Figur 13b zeigt eine Situation, in der der Hinterkasten durch eine entsprechende Rotation bzw. durch Verfahren der Wellen 28 nicht mehr wirksam ist.

## Patentansprüche

1. Windenergieanlagen-Rotorblatt (10), mit
einer Oberfläche, welche im Betrieb des Rotorblattes dem Wind ausgesetzt ist,
einer Rotorblattwurzel (12), Mittel (14) zur Veränderung der Größe der Oberfläche des Rotorblattes
**gekennzeichnet durch**
einen Rotorblatt-Hinterkasten (14) im Bereich der größten Blatttiefe des Rotorblatts, und **dadurch**, dass
im Bereich des Rotorblatt-Hinterkastens (14) bei einer Windgeschwindigkeit von > 20 m/s und/oder beim Transport des Rotorblattes der Querschnitt des Rotorblattes variiert wird,
wobei die Mittel zur Veränderung der Größe der Oberfläche **durch** ein verformbares Teil der Oberfläche im Bereich des Rotorblatt-Hinterkastens gebildet werden, wobei das verformbare Teil einen geschlossen Behälter darstellt.

2. Windenergieanlage mit wenigstens einem Rotorblatt nach einem der vorstehenden Ansprüche.

3. Windenergieanlage nach Anspruch 2, **gekennzeichnet durch**
eine Steuereinheit zum Einstellen der Mittel zur Veränderung der Größe der Oberfläche.

4. Windenergieanlage nach Anspruch 3, **gekennzeichnet durch**
Mittel zum Erfassen einer Windgeschwindigkeit, wobei diese Mittel mit der Steuereinheit gekoppelt sind und bei einer Windstärke von mehr als 20 m/s die Größe der Oberfläche des Rotorblattes oder der Rotorblätter geringer ist als bei einer Windgeschwindigkeit unterhalb von 20 m/s.

## Claims

1. A wind power installation rotor blade (10) having
a surface that in operation of the rotor blade is exposed to the wind,
a rotor blade root (12), means (14) for altering the size of the surface of the rotor blade,
**characterised by**
a rotor blade rear box (14) in the region of the greatest blade depth of the rotor blade, and in that,
in the region of the rotor blade rear box (14), the cross-section of the rotor blade is varied at a wind speed of >20 m/s and/or on transport of the rotor blade,
the means for altering the size of the surface being formed by a deformable part of the surface in the region of the rotor blade rear box, the deformable part representing a closed container.

2. A wind power installation having at least one rotor blade according to one of the preceding claims.

3. A wind power installation according to claim 2, **characterised by**
a control unit for adjusting the means for altering the size of the surface.

4. A wind power installation according to claim 3, **characterised by**
means for detecting a wind speed, those means being coupled to the control unit, and the size of the surface of the rotor blade or blades being less at a wind strength of more than 20 m/s than at a wind speed below 20 m/s.

## Revendications

1. Pale de rotor (10) d'éolienne, comportant
une surface qui est exposée au vent lorsque la pale de rotor fonctionne,
une base de pale de rotor (12),
des moyens (14) pour modifier la dimension de la surface de la pale de rotor,
**caractérisée par**
une boîte arrière (14) de pale de rotor dans la zone de la profondeur de pale la plus grande de la pale de rotor, et **caractérisée en ce que**
dans la zone de la boîte arrière (14) de la pale de rotor, dans le cas d'une vitesse de vent > 20 m/s et/ou dans le cas du transport de la pale de rotor, la section transversale de la pale de rotor est modifiée,
dans lequel les moyens servant modifier la dimension de la surface sont formés par une partie déformable de la surface dans la zone de la boite arrière de la pale de rotor, dans lequel la partie déformable constitue un récipient fermé.

2. Eolienne comportant au moins une pale de rotor selon la revendication précédente.

3. Eolienne selon la revendication 2, **caractérisée par**
une unité de commande servant à régler les moyens servant à modifier la dimension de la surface.

4. Eolienne selon la revendication 3, **caractérisée par**
des moyens pour détecter une vitesse de vent, dans lequel lesdits moyens sont couplés à l'unité de commande et la dimension de la surface de la pale de rotor ou des pales de rotor est plus petite dans le cas d'une force de vent supérieure 20 m/s que dans le cas d'une vitesse de vent inférieure 20 m/s.
